# EUROPÄISCHE PATENTSCHRIFT

(11) **EP 2 223 823 B1**
(45) Veröffentlichungstag und Bekanntmachung des Hinweises auf die Patenterteilung: **02.10.2013**
(21) Anmeldenummer: 10001875.3
(22) Anmeldetag: 24.02.2010
(51) Int. Cl.: B60N 2/54, B60N 2/50, B60N 2/52, B60N 2/18

(54) **Federungsvorrichtung für Fahrzeugsitze sowie Fahrzeugsitzaufhängung**
Suspension device for car seats and car seat mounting
Dispositif de suspension pour sièges de véhicule ainsi que suspension de siège de véhicule

(30) Priorität: 27.02.2009 DE 102009010914
(43) Veröffentlichungstag der Anmeldung: 01.09.2010
(73) Patentinhaber: Indorf Apparatebau GmbH, 29664 Walsrode (DE)
(72) Erfinder: de Geus, Adriaan, 29664 Walsrode (DE)
(74) Vertreter: Graf Glück Kritzenberger

(56) Entgegenhaltungen:
- DE-A1- 1 530 660
- DE-A1- 10 209 946
- DE-C1- 4 130 664
- GB-A- 674 251
- GB-A- 1 208 051
- GB-A- 2 064 317
- JP-A- 58 199 231

## Beschreibung

Die Erfindung betrifft eine Federungsvorrichtung für Fahrzeugsitze gemäß dem Oberbegriff des Patentanspruches 1 sowie eine Fahrzeugsitzaufhängung gemäß dem Oberbegriff des Patentanspruches 13.

Federungsvorrichtungen für Fahrzeugsitze sind bereits hinlänglich aus dem Stand der Technik bekannt. Insbesondere sind Federungsvorrichtungen für Fahrzeugsitze von Nutzfahrzeugen beispielsweise LKWs, Busse, Baumaschinen, Traktoren und dergleichen bekannt, bei denen der Fahrzeugsitz zumindest in vertikaler Richtung federnd angeordnet ist. Eine Auf- und Abbewegung kann hierbei wahlweise mechanisch, pneumatisch, hydraulisch oder in beliebiger Kombination gefedert erfolgen.

Des weiteren sind in vertikaler Richtung gefederte Fahrzeugsitze bekannt, deren Federeigenschaften auf das Gewicht, das auf den Fahrzeugsitz einwirkt, d.h. insbesondere das Gewicht des Fahrers oder Beifahrers, anpassbar ist. So können beispielsweise durch eine höhere Vorspannung einer mechanischen Feder die Federeigenschaften der Federungsvorrichtung gestrafft und damit die Federungsvorrichtung an Insassen mit einem höheren Körpergewicht angepasst werden.

Des weiteren sind in vertikaler Richtung gefederte Fahrzeugsitze mit einer Gewichtseinstellmöglichkeit sowie einer Möglichkeit zur Höhenverstellung des Fahrzeugsitzes bekannt, wobei eine Änderung der Höheneinstellung des Fahrzeugsitzes direkt die vertikalen Federeigenschaften beeinflusst. So ist beispielsweise die Erhöhung der Sitzposition mit einer Straffung der Federeigenschaften verbunden, was einer höheren Gewichtseinstellung entspricht.

Eine gattungsgemäße Federungsvorrichtung für die Vertikalfederung von Fahrzeugsitzen und eine Fahrzeugsitzaufhängung ist aus den Dokumenten GB-A-1208051 und GB-A-2064317 bekannt.

Ausgehend vom dargestellten Stand der Technik liegt der vorliegenden Erfindung die Aufgabe zugrunde, eine Federungsvorrichtung für Fahrzeugsitze anzugeben, die es ermöglicht, die in einem Fahrzeug, insbesondere einem Nutzfahrzeug auftretenden Schwingungen zu neutralisieren und damit die auftretenden Kräfte bzw. Schwingungen vom Fahrzeuginsassen fern zu halten. Des Weiteren ist es Aufgabe der Erfindung, eine Federungsvorrichtung für Fahrzeugsitze anzugeben, die verbesserte vertikale Federeigenschaften aufweist. Die Aufgabe wird erfindungsgemäß ausgehend von den Merkmalen der Oberbegriffe der Patentansprüche 1 und 12 jeweils durch deren kennzeichnende Merkmale gelöst.

Der wesentliche Aspekt der erfindungsgemäßen Federungsvorrichtung ist darin zu sehen, dass die zumindest eine Federanordnung der Federungsvorrichtung an dem zweiten Sitzgestellelement angeordnet ist und zur Krafteinleitung von vertikal auf das erste Sitzgestellelement einwirkenden Kräften in die Federanordnung zumindest eine zweite Hebelvorrichtung vorgesehen ist, die mit ihrem ersten Ende mit der Federanordnung und mit dem zweiten Ende mit dem ersten Sitzgestellelement verbunden ist. Besonders vorteilhaft können mittels der erfindungsgemäßen Federungsvorrichtung unabhängig von vom Körpergewicht und der Körpergröße eines Fahrzeuginsassen die Federeigenschaften eines Fahrzeugsitzes - unabhängig von dessen Höhenverstellung - eingestellt werden und damit neben einem verbesserten Bedienungskomfort ein optimierter Sitzkomfort erreicht werden.

Besonders vorteilhaft ist die Längsachse der Federanordnung horizontal oder im Wesentlichen horizontal in der Federungsvorrichtung angeordnet, wobei die Längsachse der Federanordnung senkrecht oder näherungsweise senkrecht zur Vertikalachse der Federungsvorrichtung verläuft. Somit wird mittels der erfindungsgemäßen Federungsvorrichtung, insbesondere der zweiten Hebelvorrichtung eine Umlenkung von vertikalen Kräften in die horizontal angeordnete Federanordnung möglich, wodurch insbesondere die Bauhöhe der Federungsvorrichtung reduziert werden kann.

Erfindungsgemäß ist die zweite Hebelvorrichtung mehrteilig ausgebildet und zwar dreiteilig, wobei die zweite Hebelvorrichtung zumindest einen Krafteinleitungs-, zumindest einen Kraftumleitungs- und zumindest einen Kraftausleitungshebel aufweist. Durch die mehrteilige Ausbildung der Hebelvorrichtung ist es möglich, die entstehenden Vertikalkräfte an ihrem Entstehungsort aufzunehmen und über die einzelnen Hebelelemente der zweiten Hebelvorrichtung an die Federanordnung zu führen. Somit kann die Federanordnung sowohl räumlich als auch in ihrer Lage nahezu vollständig vom Entstehungsort der Vertikalkräfte separiert und an geeigneter Stelle platzsparend in der Federungsvorrichtung untergebracht werden.

Weiterhin vorteilhaft weist die Federungsvorrichtung Mittel zur Anpassung der Federeigenschaften an das auf die Federungsvorrichtung einwirkende Gewicht auf. Diese Mittel können beispielsweise darin bestehen, dass die Federanordnung der Federungsvorrichtung aus einer mechanischen Feder- Dämpfungseinheit gebildet wird und die Vorspannung der mechanischen Feder beispielweise mittels einer Gewindestange derart geändert werden kann, um abgestimmt auf das Fahrzeuginsassengewicht die Federeigenschaften zu optimieren.

In einer weiteren bevorzugten Ausführungsform kann die zweite Hebelvorrichtung an beliebigen Positionen innerhalb der Federungsvorrichtung vorgesehen sein. Dadurch ist es zum einen möglich, durch eine geeignete Anordnung der zweiten Hebelvorrichtung eine möglichst kompakte Bauform der Federungsvorrichtung zu erreichen, zum anderen kann über die Position der zweiten Hebelvorrichtung in Bezug auf die Federanordnung ein hinsichtlich des Federverhaltens optimales Übersetzungsverhältnis erreicht und dabei das Federverhalten positiv beeinflusst werden.

Zur Krafteinleitung der Vertikalkräfte in die Federanordnung können auch mehrere zweite Hebelvorrichtungen innerhalb der Federungsvorrichtung vorgesehen, die beispielsweise innerhalb der Grundfläche der Federungsvorrichtung positioniert sind und zudem unterschiedliche Übersetzungsverhältnisse aufweisen. Vorteilhaft wird dadurch ein optimales Federverhalten in Bezug auf Sitzkomfort und Schwingungsübertragung auf den Fahrzeuginsassen erreicht.

In einer weiteren bevorzugten Ausführungsform weist die Federungsvorrichtung neben der Vertikalfederung auch eine Horizontalfederung auf, die vorzugsweise an dem einem Fahrzeugsitz nächstliegenden, ersten Sitzgestellelement angeordnet ist. Damit ist es möglich, neben den vertikalen Schwingungen auch Horizontalbewegungen zumindest teilweise vom Körper des Fahrzeuginsassen abzuhalten bzw. diese gedämpft weiterzuleiten.

Des weiteren umfasst die Erfindung eine Fahrzeugsitzaufhängung bestehend aus einer oben beschriebenen Federungsvorrichtung und einem Scherenhubtisch, der zur Höheneinstellung des Fahrzeugsitzes vorgesehen ist. Durch die derartige Ausbildung eines Fahrzeugsitzes und zwar eines getrennten Elementes für die Höheneinstellung, das unabhängig von der Vertikalfederungsvorrichtung ist, ist es möglich, eine Höheneinstellung des Fahrzeugsitzes vorzunehmen, ohne dabei eine Änderung der Federeigenschaften der Vertikalfederung, insbesondere eine Veränderung der Gewichtseinstellung zu bewirken.

Weitere vorteilhafte Ausbildungen der erfindungsgemäßen Federungsvorrichtung sowie der erfindungsgemäßen Fahrzeugsitzaufhängung sind Gegenstand der abhängigen Ansprüche.

Nachfolgend wird die Erfindung an mehreren Ausführungsbeispielen anhand von Figuren näher beschrieben. Es zeigen:
- Fig. 1: beispielhaft eine Seitenansicht einer erfindungsgemäßen Federungsvorrichtung im unbelasteten Zustand;
- Fig. 2: beispielhaft die erfindungsgemäße Federungsvorrichtung gemäß Figur 1 im belasteten Zustand;
- Fig. 3: beispielhaft eine Prinzipskizze unterschiedlicher Anordnungsvarianten einer oder mehrerer zweiter Hebelvorrichtungen in Form einer Draufsicht auf das zweite Sitzgestellelement;

- Fig. 4 - 7: beispielhaft eine schematische Prinzipdarstellungen betreffend die Funktionsweise der erfindungsgemäßen Federungsvorrichtung bei unterschiedlicher vertikaler Belastung der zweiten Hebelvorrichtung;
- Fig. 8: beispielhaft eine Fahrzeugsitzaufhängung mit Vertikal- und Horizontalfederungsvorrichtung und Scherenhubtisch in einer Seitenansicht;
- Fig. 9: beispielhaft eine Fahrzeugsitzaufhängung mit Vertikal- und Horizontalfederungsvorrichtung und Scherenhubtisch im unbelasteten Zustand in einer seitlichen Schnittdarstellung;
- Fig. 10: beispielhaft eine Fahrzeugsitzaufhängung mit Vertikal- und Horizontalfederungsvorrichtung und Scherenhubtisch im belasteten Zustand in einer seitlichen Schnittdarstellung und
- Fig. 11: beispielhaft eine Draufsicht auf die erfindungsgemäße Fahrzeugsitzaufhängung, insbesondere dessen Horizontalfederungsvorrichtung.

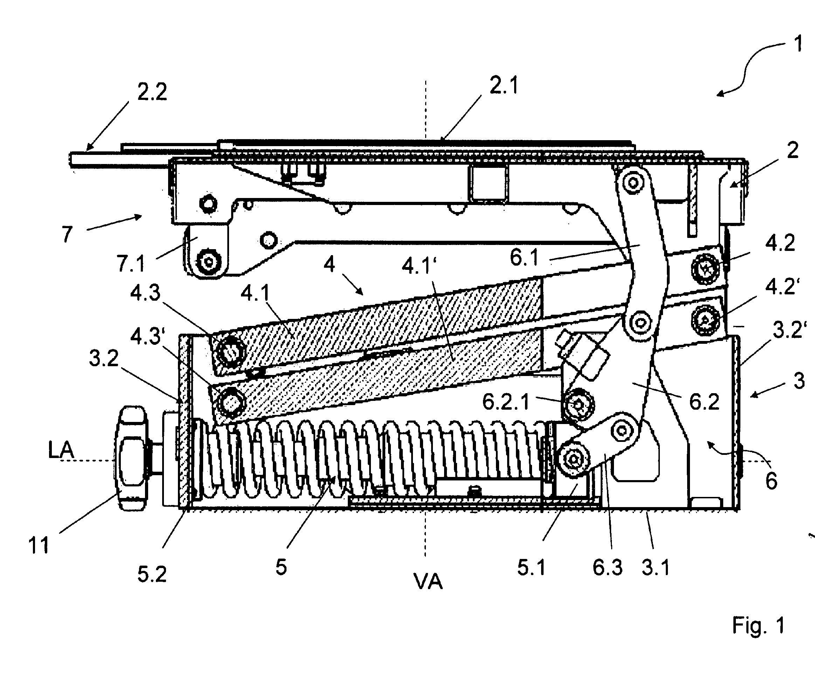

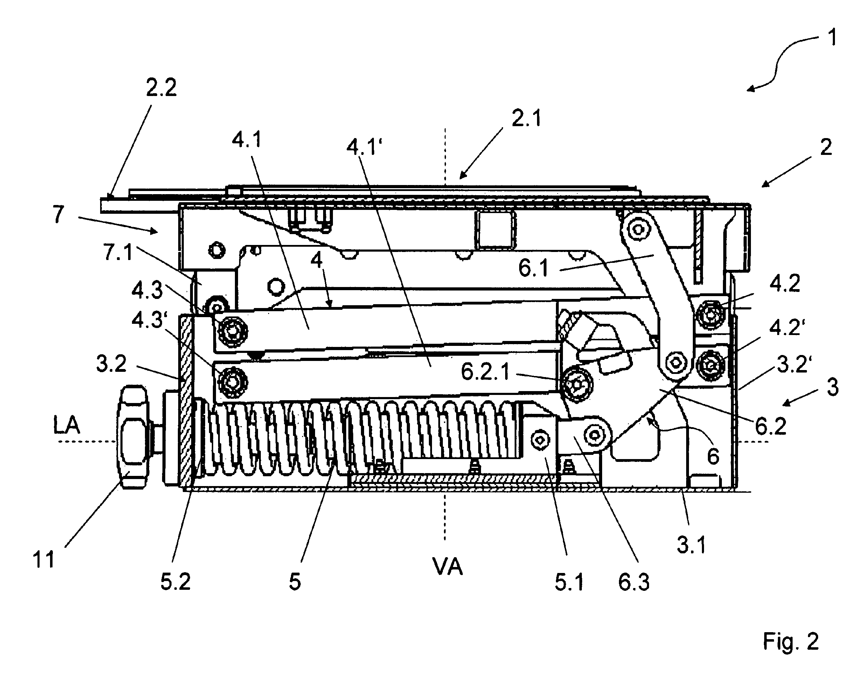

In den Figuren 1 und 2 ist jeweils beispielhaft eine schematische Seitenansicht einer erfindungsgemäßen Federungsvorrichtung 1 dargestellt, und zwar in unterschiedlichen Belastungszuständen. Die Federungsvorrichtung 1 ist zur Aufnahme eines Fahrzeugsitzes mit einer Sitzplatte und einer zugehörigen Rücklehne vorgesehen. Ferner kann diese auch eine Teilkomponente einer Fahrzeugsitzmechanik in einem Fahrzeug bilden.

Die Federungsvorrichtung 1 besteht im Wesentlichen aus einem ersten und zweiten Sitzgestellelement 2, 3, die mittels einer ersten Hebelvorrichtung 4 gelenkig miteinander verbunden sind. Das erste und zweite Sitzgestellelement 2, 3 sind hierbei im Wesentlichen flach, d.h. mit geringer Höhe, ausgebildet und bilden einen im horizontalen Querschnitt näherungsweise rechteckförmigen Gestellrahmen aus. Die horizontale Ebenen des ersten und zweiten Sitzgestellelementes 2, 3 verlaufen näherungsweise parallel zueinander und näherungsweise senkrecht zu einer in den Figuren dargestellten Vertikalachse VA der Federungsvorrichtung 1.

Die erste Hebelvorrichtung 4 umfasst beispielsweise jeweils zwei parallele oder näherungsweise parallele Hebelarme 4.1, 4.1', die entlang der beiden Längsseiten des ersten und zweiten Sitzgestellelementes 2, 3 verlaufen und die jeweils mit Ihren freien Enden am ersten Sitzgestellelement 2 in einem ersten Anlenkpunkt 4.2, 4.2' und am zweiten Sitzgestellelement 3 in einem zweiten Anlenkpunkt 4.3, 4.3' gelenkig montiert sind. Der erste und zweite Anlenkpunkt 4.2, 4.2', 4.3, 4.3' sind jeweils an zwei gegenüberliegenden Stirnseiten der Federungsvorrichtung 1 bzw. des ersten und zweiten Sitzgestellelementes 2, 3 angeordnet. Eine derartige Ausbildung der ersten Hebelvorrichtung 4 ermöglicht eine Bewegung des ersten Sitzgestellelementes 2 gegenüber dem zweiten Sitzgestellelement 3 in vertikaler Richtung.

Ferner umfasst die Federungsvorrichtung 1 zumindest eine vorzugsweise längliche Federanordnung 5, die horizontal verschiebbar am zweiten Sitzgestellelement 3 befestigt oder im zweiten Sitzgestellelement 3 aufgenommen ist. Die Federungsanordnung befindet sich somit in einer näherungsweise senkrecht zur Vertikalachse VA der Federungsvorrichtung 1 verlaufenden Ebene. Vorzugsweise erstreckt sich die Längsachse LA der Federanordnung 5 ebenfalls näherungsweise senkrecht zur Vertikalachse VA der Federungsvorrichtung 1.

Die Federungsanordnung 5 kann beispielsweise entweder als Zug- oder Druckfederanordnung ausgebildet sein. Vorzugsweise ist das erste Ende 5.1 der Federanordnung 5 beispielsweise mit einer mit dem Boden 3.1 des zweiten Sitzgestellelement 3 fixierten Führung verbunden und das zweite Ende 5.2 der Federanordnung 5 an einem stirnseitigen Seitenelement 3.2 des zweiten Sitzgestellelementes 3 montiert.

Zusätzlich zur ersten Hebelvorrichtung 4 umfasst die erfindungsgemäße Federungsvorrichtung 1 eine zweite Hebelvorrichtung 6, die zur drehgelenkigen Verbindung des ersten Endes 5.1 der im zweiten Sitzgestellelement 3 aufgenommenen Federanordnung 5 mit dem ersten Sitzgestellelement 2 vorgesehen ist.

Im vorliegenden Ausführungsbeispiel gemäß Figur 1 und 2 ist die zweite Hebelvorrichtung 6 beispielsweise dreiteilig ausgebildet und besteht aus einem Krafteinleitungshebel 6.1, einem Kraftumleitungshebel 6.2 und einem Kraftausleitungshebel 6.3. Sowohl der Krafteinleitungshebel 6.1 als auch der Kraftausleitungshebel 6.3 sind drehgelenkig mit dem Kraftumleitungshebel 6.2 verbunden. Darüber hinaus weist der Krafteinleitungshebel 6.1 eine drehgelenkige Verbindung zum ersten Sitzgestellelement 2 und der Kraftausleitungshebel 6.3 zum zweiten Sitzgestellelement 2 auf. Der Kraftumleitungshebel 6.2 selbst ist in einem Umlenkpunkt 6.2.1 drehbar um eine vorzugsweise horizontale Drehachse mit dem zweiten Sitzgestellelement 3 verbunden, wobei die Drehachse näherungsweise senkrecht zur Vertikalachse VA der Federungsvorrichtung 1 und/oder zur Längsachse LA der Federanordnung 5 verläuft.

Nimmt ein Fahrzeuginsasse auf einem Fahrzeugsitz Platz, der mit der erfindungsgemäßen Federungsvorrichtung 1 zusammenwirkt, so wird zumindest eine vorzugsweise vertikal auf das erste Sitzgestellelement 2 einwirkende Kraft erzeugt. Die am ersten Sitzgestellelement 2 auftretenden vertikalen Kräfte bzw. Vertikalkräfte werden vom Krafteinleitungshebel 6.1 aufgenommen und dem angelenkten Kraftumleitungshebel 6.2 zugeführt. Durch die drehbare Lagerung des Kraftumleitungshebels 6.2 um den Umlenkpunkt 6.2.1 wird die Kraftrichtung verändert und über den am Kraftumleitungshebels 6.2 angelenkten Kraftausleitungshebel 6.3 in die horizontal angeordnete Federanordnung 5 eingeleitet. Der Kraftumleitungshebel 6.2 weist hierzu vorzugsweise einen dreieckförmigen Querschnitt auf, wobei der Krafteinleitungshebel 6.1 und der Kraftausleitungshebel 6.3 in den sich an die Hypotenuse anschließenden Dreiecksbereichen angelenkt sind. Im der Hypotenuse gegenüberliegenden Dreiecksbereich ist der Umlenkpunkt 6.2.1 vorgesehen.

Im Falle des Einwirkens von Vertikalkräften auf das erste Sitzgestellelement 2 werden diese mittels der zweiten Hebelvorrichtung 6 somit auf die horizontal angeordnete Federanordnung 5 übertragen, wodurch sich das erste Ende 5.1 der Federanordnung 5 vorzugsweise schlittenartig verschiebt, und zwar in Richtung der Längsachse LA der Federanordnung 5. Hierbei ist die Federanordnung 5 mit ihrer Längsachse LA im Einbauzustand vorzugsweise horizontal oder im Wesentlichen horizontal ausgerichtet, d.h. eine vertikal auf das erste Sitzgestellelement 2 einwirkende Kraft wird mittels der zweiten Hebelvorrichtung 6 in eine horizontal auf die Federanordnung 5 einwirkende Kraft umgelenkt.

Im gezeigten Ausführungsbeispiel ist die Federanordnung 5 als Spiralfeder mit innen liegendem Gas- oder Öldruckdämpferelement ausgebildet. Hiervon abweichend kann die Federanordnung 5 jedoch auch als Luftfeder, als Gasdruckfeder oder als Gummidämpfungssystem ausgebildet sein.

In einer bevorzugten Ausführungsvariante sind die Dämpfungs- bzw. Federeigenschaften der Federanordnung 5 einstellbar. Hierzu ist beispielsweise an der nach außen gewandten Seitenfläche des stirnseitigen Seitenelementes 3.2 des zweiten Sitzgestellelementes 3 ein erstes Handrad 11 vorgesehen, das mit einer Gewindestange 9 verbunden ist. Diese ist durch das stirnseitige Seitenelemente 3.2 des zweiten Sitzgestellelementes 3 und die sich in Richtung des gegenüberliegenden weiteren stirnseitigen Seitenelementes 3.2' anschließende Federanordnung 5 hindurchgeführt und mit dem ersten Ende 5.1 der Federanordnung 5 fest verbunden ist, d.h. die Federanordnung 5 umschließt somit die Gewindestange.

Das Handrad 11 bildet zusammen mit der Gewindestange 9 Mittel zur Einstellung der Federeigenschaften der Federanordnung 5 aus, und zwar wird durch geeignetes Drehen des Handrades 11 im Uhrzeigersinn bzw. im Gegenuhrzeigersinn die Spiralfeder gespannt oder entspannt und hierdurch die Federeigenschaften der Federanordnung 5 eingestellt. Hierdurch können die Federeigenschaften der Federanordnung 5 an das auf das erste Sitzgestellelement 2 einwirkende Gewicht eines Fahrzeuginsassen angepasst werden. Beim Drehen am Handrad 11 wird somit die Federvorspannung der Federanordnung 5 durch Verschieben des ersten Endes 5.1 der Federanordnung 5 eingestellt, sodass beispielsweise bei leichteren Fahrzeuginsassen eine geringere Federvorspannung eingestellt werden kann als bei Fahrzeuginsassen mit höherem Körpergewicht.

In Figur 2 ist die in Figur 1 dargestellte Federungsvorrichtung 1 in einer schematischen Seitenansicht im belasteten Zustand gezeigt, wobei die Gewichtseinstellung derart gewählt wurde, dass die Federungsvorrichtung 1 optimale Federeigenschaften für das vorliegende Insassengewicht bereitstellt. Diese optimale Gewichtseinstellung zeichnet sich dadurch aus, dass die Federungsvorrichtung 1 bei Belastung mit dem Insassengewicht näherungsweise den halben, potentiell möglichen Federweg einfedert, sodass beim Auftreten von Vertikalbewegungen weiterhin ausreichend Federweg zur Verfügung steht.

Durch eine entsprechende Dimensionierung der Längen des Krafteinleitungshebels 6.1 sowie des Kraftausleitungshebels 6.3 sowie der Abstände der Anlenkpunkte des Krafteinleitungshebels 6.1 und des Kraftausleitungshebels 6.3 in Bezug auf den Kraftumleitungshebels 6.2 wird ein Übersetzungsverhältnis festgelegt, welches an die jeweils vorliegenden Federungsanforderungen individuell einstellbar ist. Darüber hinaus können zur Einleitung der auf das erste Sitzgestellelement 2 einwirkenden Vertikalkräfte in die Federanordnung 5 mehrere zweite Hebelvorrichtungen 6 vorgesehen sein, welche beispielsweise unterschiedliche Übersetzungsverhältnisse aufweisen. Hierdurch ist beispielsweise ein individuell vorgebbares Federungsprofil real isierbar.

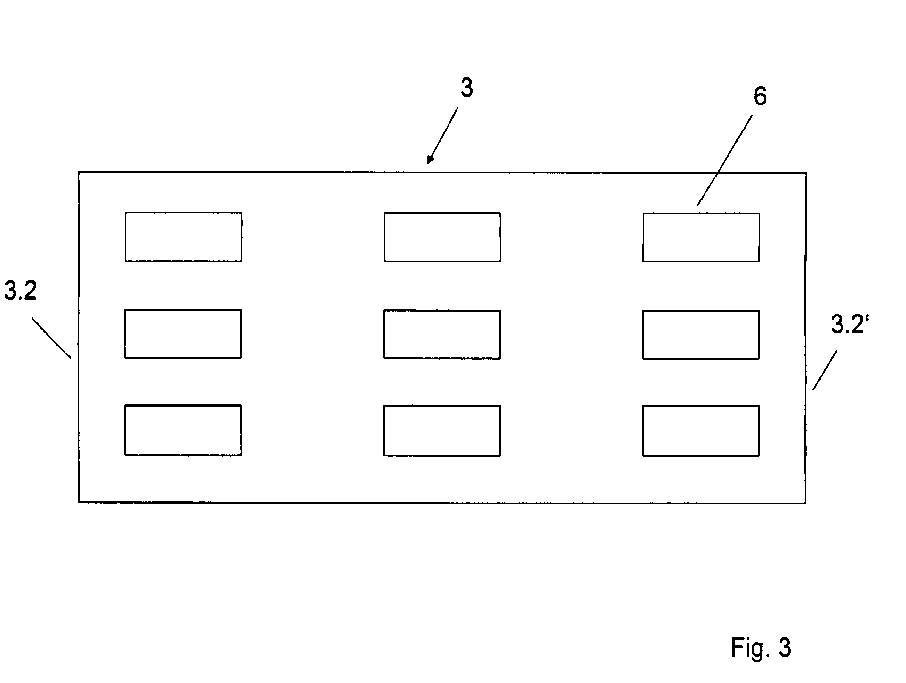

In Figur 3 sind beispielhaft in einer Prinzipskizze diverse Positionierungsmöglichkeiten einer oder mehrerer zweiter Hebelvorrichtungen 6 innerhalb der erfindungsgemäßen Federungsvorrichtung 1 dargestellt. Hierbei zeigt Figur 3 prinzipiell mögliche Positionierungspositionen auf dem zweiten Sitzgestellelement 3. Ein Rechteck innerhalb des zweiten Sitzgestellelements 3 symbolisiert hierbei beispielhaft eine Positionierungsposition der zweiten Hebelvorrichtung 6. So können eine oder mehrere zweite Hebelvorrichtungen 6 an nahezu beliebigen Positionen über die Grundfläche der Federungsvorrichtung 1, insbesondere im vorderen, mittleren sowie hinteren Bereich verteilt werden. Hierbei sind auch beliebige Kombinationen der dargestellten Positionierungspositionen denkbar. Bei Verwendung mehrerer zweiter Hebelvorrichtungen 6 können unterschiedliche Übersetzungsverhältnisse der einzelnen zweiten Hebelvorrichtungen 6 zur Anwendung kommen, wodurch das erzeugte Federverhalten der Federungsvorrichtung 1 optimiert wird. So kann beispielsweise ein Federverhalten mit einem gewünschten Federungsprofil erreicht werden.

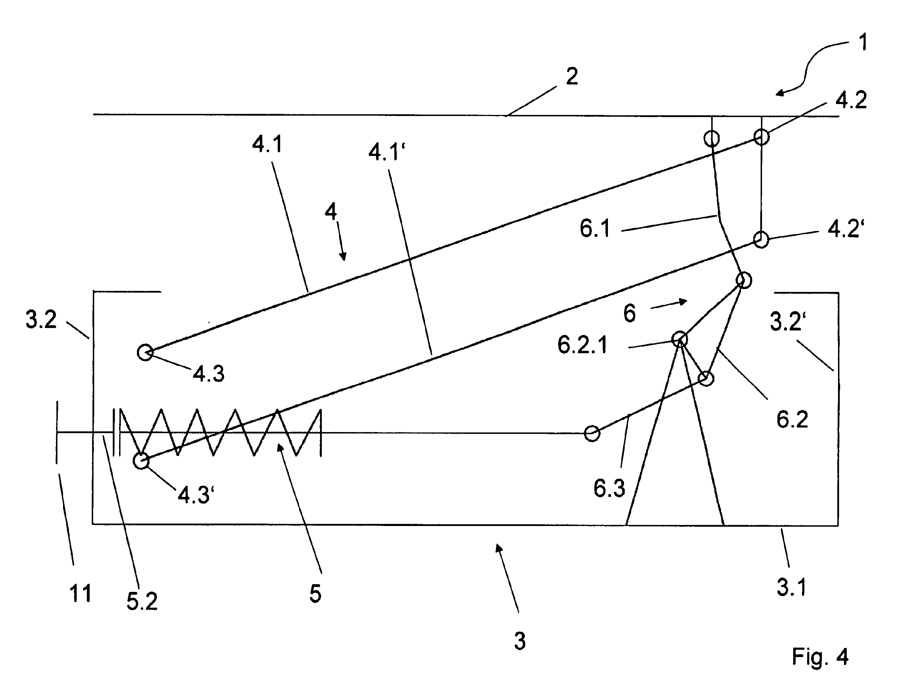

Die Figuren 4 - 7 zeigen schematische Prinzipdarstellungen betreffend die Funktionsweise der erfindungsgemäßen Federungsvorrichtung 1 bei unterschiedlichen vertikalen Belastungen der zweiten Hebelvorrichtung 6. Hierbei sind die einzelnen Komponenten der erfindungsgemäßen Federungsvorrichtung 1 und die vorliegenden Dreh- und Anlenkpunkte 4.2, 4.2', 4.3, 4.3', 6.2.1 schematisch dargestellt.

Die in den Figuren 4 bis 7 dargestellte Federungsvorrichtung 1 weist jeweils eine grundsätzliche Anordnung bestehend aus dem erstem Sitzgestellelement 2, dem zweiten Sitzgestellelement 3 sowie der Verbindung des ersten und zweiten Sitzgestellelementes 2, 3 über die erste Hebelvorrichtung 4 auf. Die erste Hebelvorrichtung 4 umfasst jeweils zwei im Wesentlichen parallele Hebelarme 4.1, 4.1' pro Längsseite der Federungsvorrichtung 1, die diagonal zur Vertikalachse der Federungsvorrichtung 1 verlaufen, und zwar vom stirnseitigen Seitenelement 3.2 des zweiten Sitzgestellelementes 3 in das gegenüberliegenden stirnseitige Seitenelement des ersten Sitzgestellelementes 2.

Die in den Figuren 4 bis 7 gezeigten Ausführungsbeispiele offenbaren jeweils unterschiedliche Anordnungen der zweiten Hebelvorrichtung 6 sowie der zugehörigen Federanordnung 5 innerhalb der Federungsvorrichtung 1. Die in Figur 4 gezeigte Prinzipdarstellung entspricht der in den Figuren 1 und 2 dargestellten Ausführungsform, bei der die zweite Hebelvorrichtung 6 in der Nähe des stirnseitigen Seitenelementes 3.2' und die Federanordnung 5 im Bereich des gegenüberliegenden stirnseitigen Seitenelements 3.2 angeordnet sind.

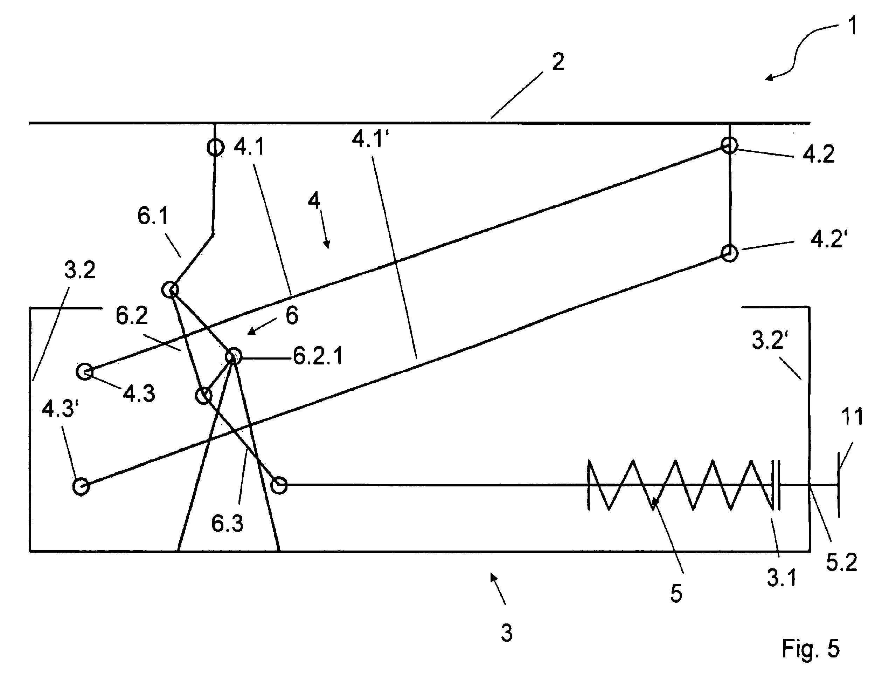

Die Darstellung in Figur 5 zeigt eine zu der von Figur 4 ähnliche Ausführungsform, wobei die Anordnung vom ersten Sitzgestellelement 2, zweiten Sitzgestellelement 3 und von der Hebelvorrichtung 4 unverändert ist. Im Unterschied zum Ausführungsbeispiel in Figur 4 ist hier die zweite Hebelvorrichtung 6 in der Nähe des Seitenelements 3.2 und die Federanordnung 5 im Bereich des Seitenelements 3.2' angeordnet.

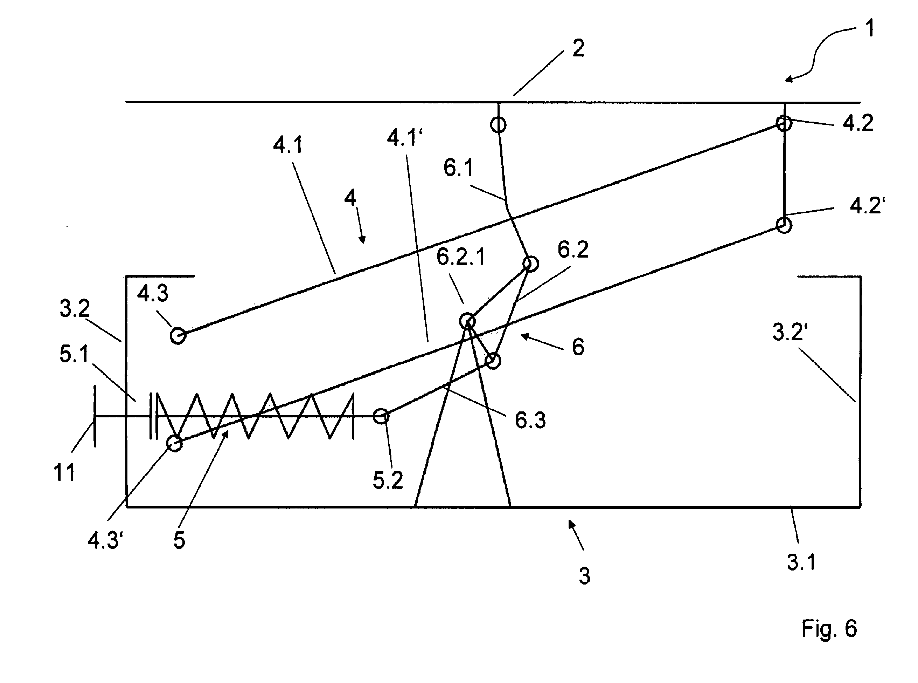

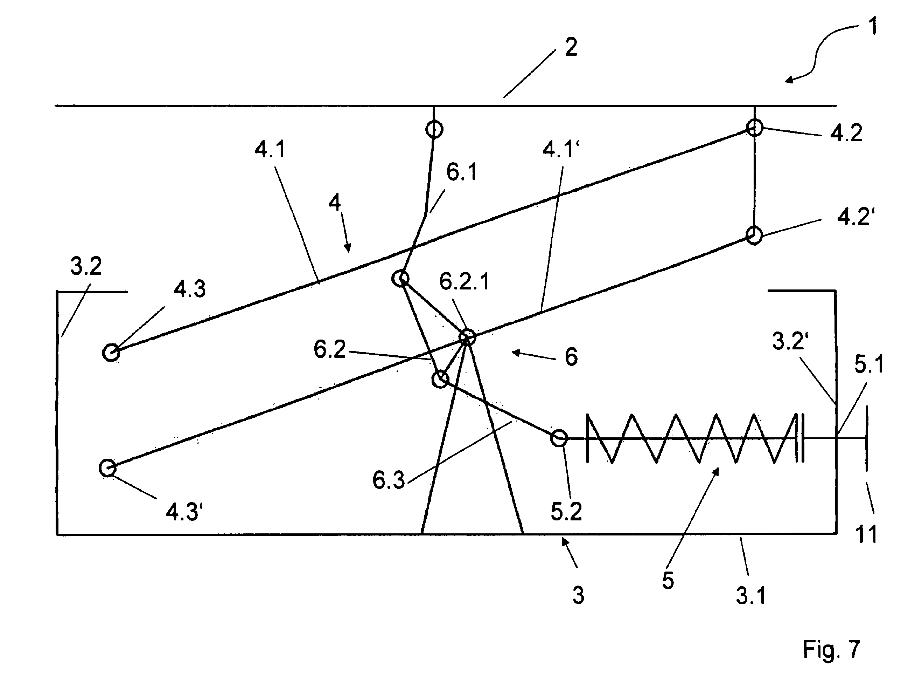

Figuren 6 und 7 zeigen jeweils eine weitere Ausführungsvariante, wobei die zweite Hebelvorrichtung 6 näherungsweise im Zentrumsbereich des Federungsvorrichtung 1, insbesondere des zweiten Sitzgestellelementes 3 angeordnet ist. In Figur 6 erfolgt die Drehung um den Umlenkpunkt 6.2.1 im Uhrzeigersinn und in Figur 7 im Gegenuhrzeigersinn. Über die unterschiedliche Positionierung der zweiten Hebelvorrichtung 6 innerhalb der Federungsvorrichtung 1 und hierbei insbesondere den Abstand des Anlenkungspunktes des Krafteinleitungshebels 6.1 am ersten Sitzgestellelement 2 im Bezug auf die Anlenkpunkte 4.2 und 4.2' kann das Federverhalten der Federungsvorrichtung 1 eingestellt werden. Zudem kann über unterschiedliche Hebellängen des Krafteinleitungshebels 6.1, des Kraftumleitungshebels 6.2 und des Kraftausleitungshebels 6.3 das Übersetzungsverhältnis der zweiten Hebelvorrichtung 6 verändert und damit die Federungswirkung der Federungsvorrichtung 1 an das gewünschte Federverhalten adaptiert werden.

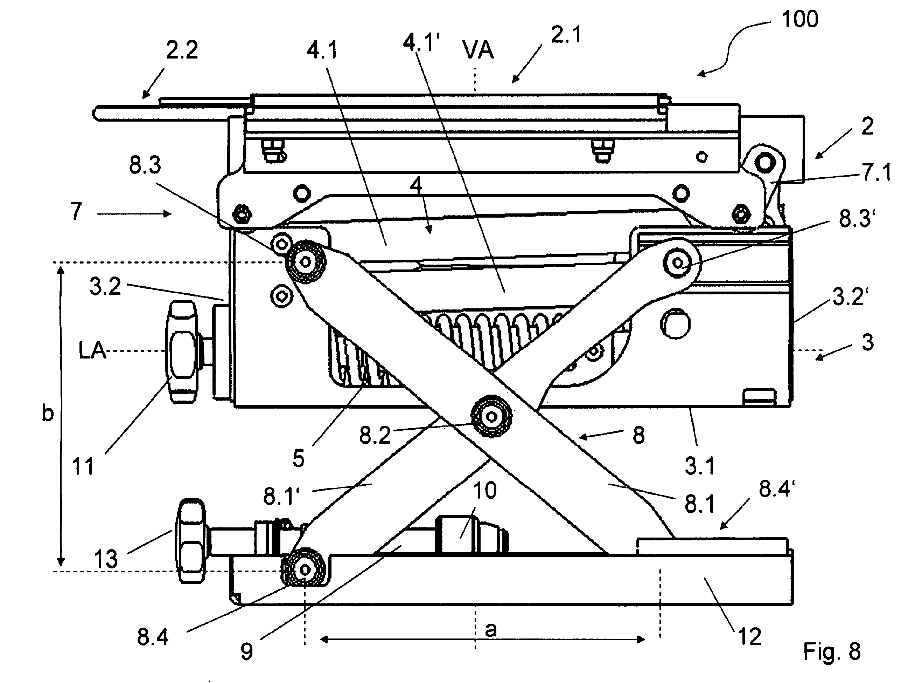

In Figur 8 ist beispielhaft eine Fahrzeugsitzaufhängung 100 bestehend aus einer Federungsvorrichtung 1 und einem Scherenhubtisch 8 dargestellt, wobei der Scherenhubtisch 8 zur Höheneinstellung der Fahrzeugsitzaufhängung 100 vorgesehen ist. Der Aufbau eines derartigen Scherenhubtisch 8 ist prinzipiell bekannt und wird häufig zur Höheneinstellung bei Fahrzeugsitzen verwendet.

Im vorliegenden Ausführungsbeispiel besteht der Scherenhubtisch 8 aus einem Bodenelement 12 und zwei Schenkelpaaren 8.1, 8.1', wobei die Schenkel 8.1, 8.1' näherungsweise mittig in einem Gelenkpunkt 8.2 gekreuzt und somit drehgelenkig miteinander verbunden sind. Die oberen freien Enden der Schenkel 8.1, 8.1' des Scherenhubtisches 8 sind über obere Anlenkpunkte 8.3, 8.3' mit dem zweiten Sitzgestellelement 3 und die unteren freien Enden der Schenkel 8.1, 8.1' mit dem Bodenelement 12 über untere Anlenkpunkte 8.4, 8.4'verbunden, und zwar vorzugsweise dreh- bzw. beweglich. Ein der Anlenkpunkt 8.3', 8.4' ist jeweils in einem Schienenelement geführt und somit horizontal verschiebbar ausgebildet.

Durch die horizontale Verschiebbarkeit eines oberen und unteren Anlenkpunktes 8.3', 8.4' ist der horizontale Abstand a der Anlenkpunktpaare 8.3, 8.3' sowie 8.4, 8.4' zueinander veränderbar, wobei diese Abstandsänderung über den Gelenkpunkt 8.2 in eine Änderung des vertikalen Abstandes b der Anlenkpunkte 8.3, 8.4 sowie der Anlenkpunkte 8.3', 8.4' umgesetzt wird, welche wiederum in einer Höhenverstellung des Scherenhubtisches 8 resultiert.

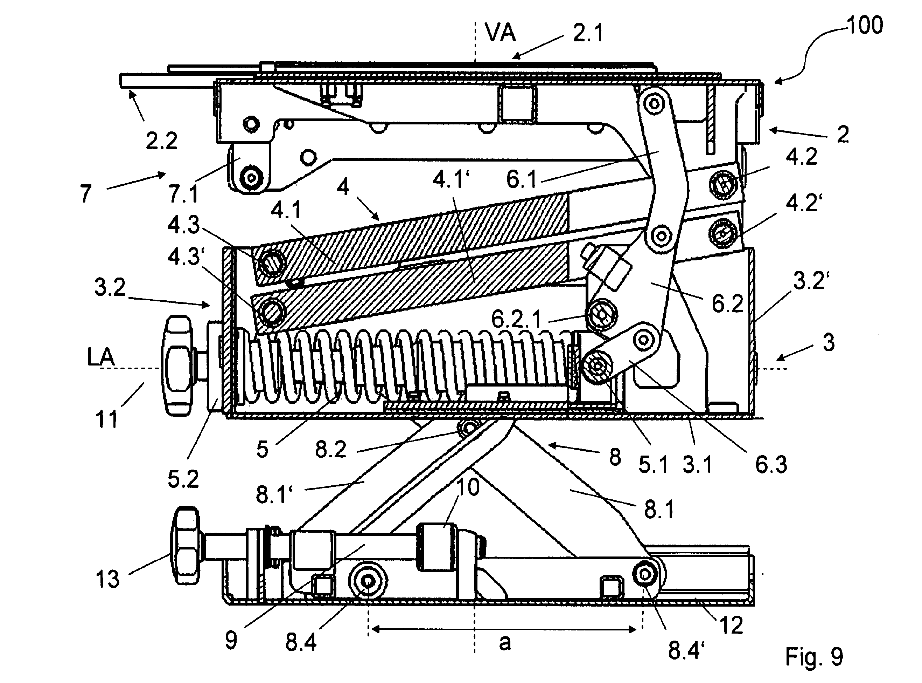

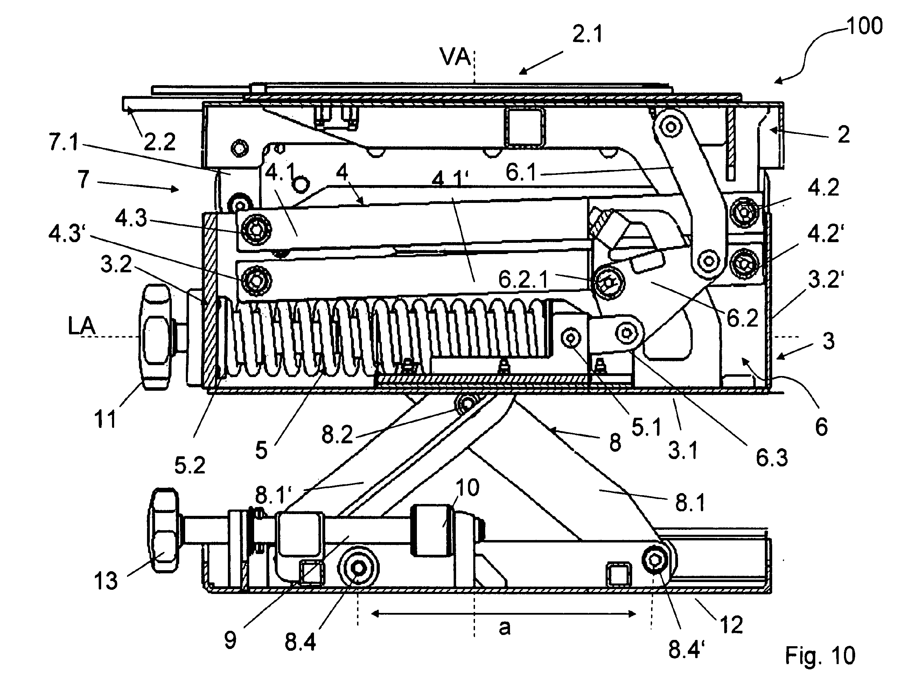

Die Einstellung des horizontalen Abstandes a erfolgt gemäß Figur 9 und 10 über ein Handrad 13, das mit einer Gewindestange 9 gekoppelt ist. Eine Drehung am Handrad 13 sorgt für eine Veränderung des horizontalen Abstandes a vom Anlenkpunktes 8.4' zum Anlenkpunkt 8.4. Diese Verschiebung des Anlenkpunktes 8.4' sorgt durch die drehgelenkige Verbindung der Schenkel 8.1, 8.1' des Scherenhubtisches 8 für eine horizontale Verschiebung des Anlenkpunktes 8.3' und resultiert in einer Änderung des vertikalen Abstandes b der Anlenkungspaare 8.3, 8.4 sowie 8.3', 8.4'. So führt beispielsweise eine Vergrößerung des horizontalen Abstands a zu einer Verringerung des vertikalen Abstandes b und damit einer Absenkung der Fahrzeugsitzaufhängung 100. In umgekehrter Weise führt eine Verringerung des horizontalen Abstandes a zu einer Vergrößerung des vertikalen Abstandes b und damit zu einer Erhöhung der Fahrzeugsitzaufhängung 100.

Vorzugsweise ist die Gewindestange 9 mittels eines Gummipuffers 10 schwingungsabsorbierend gelagert. Dieser Gummipuffer 10 nimmt Schwingungen niedriger Frequenz auf, damit diese nicht an die eigentliche Federungsvorrichtung 1 übertragen werden.

Durch die Trennung der Höhenverstellung der Fahrzeugsitzaufhängung 100 über den Scherenhubtisch 8 von der Federungsvorrichtung 1 ist die Gewichtseinstellung mittels des ersten Handrades 11 der Federanordnung 5 unabhängig von der Höheneinstellung mittels des zweites Handrades 13 der Fahrzeugsitzaufhängung 100. Dies wird im Folgenden anhand der Figuren 9 und 10 exemplarisch beschrieben.

In Figur 9 ist eine schematische Seitenansicht der erfindungsgemäßen Fahrzeugsitzaufhängung 100 dargestellt, und zwar in einem unbelasteten Zustand. Im Vergleich hierzu zeigt Figur 10 die Fahrzeugsitzaufhängung 100 im belasteten Zustand.

Die Figuren 9 und 10 zeigen deutlich, dass eine vertikale Belastung der Federungsvorrichtung 1 zu einem Verschwenken des Kraftumleitungshebels 6.2 um den Umlenkpunkt 6.2.1 und damit zu einer Krafteinleitung vom Krafteinleitungshebel 6.1 in den Kraftumleitungshebels 6.2 und von diesen über den Kraftausleitungshebel 6.3 in die Federanordnung 5 führt. Daraus resultierend federt das erste Sitzgestellelement 2 soweit ein, dass sich ein Gleichgewicht aus Vertikalkraft und der durch die Federanordnung 5 entgegengesetzte Federkraft ergibt.

Figur 10 zeigt die erfindungsgemäße Fahrzeugsitzaufhängung 100 in Seitenansicht in einem belasteten Zustand. Hierbei liegt eine nahezu optimale Anpassung der Federeigenschaften die Federungsvorrichtung 1 an das vorliegende Gewicht des Fahrzeuginsassen vor. Die Vorspannung der Federungsanordnung 5 ist mittels des Handrades 11 derart gewählt, dass sich ein Kräftegleichgewicht aus der vertikal einwirkenden Gewichtskraft des Fahrzeuginsassen und der Federkraft im mittleren Bereich des durch die Federungsvorrichtung 1 bereitgestellten Federweges ergibt.
Somit ergibt sich ausgehend von dem in Figur 10 gezeigten Zustand sowohl nach oben als auch nach unten jeweils näherungsweise ein hälftiger Federweg.

Im Folgenden wird die Vorgehensweise der Justierung der Fahrzeugsitzaufhängung 100 an ein bestimmtes Gewicht eines Fahrzeuginsassen sowie die Einstellung einer gewünschten Höhenposition erläutert.

Zunächst wird mittels des Handrades 11 die Federvorspannung der Federungsanordnung 5 derart verändert, dass sich ein Kräftegleichgewicht aus der aus dem Fahrzeuginsassengewicht resultierenden Vertikalkraft und der entgegengesetzten Federkraft näherungsweise in der Mitte des Federweges ergibt. Anschließend wird mittels des zweiten Handrades 13 eine Höhenverstellung der Fahrzeugsitzaufhängung 100 vorgenommen. Hierbei ist die Höheneinstellung unabhängig von der Einstellung der Federungsvorrichtung 1 und beeinflusst somit das Federverhalten dieser Federungsvorrichtung 1 nicht. Mit der so vorgenommenen Einstellung der Fahrzeugsitzaufhängung 100 kann für jeglichen Fahrzeuginsassen unabhängig von dessen Körpergewicht und Körpergröße ein optimales Federverhalten und damit ein optimierter Sitzkomfort erreicht werden.

Die Fahrzeugsitzaufhängung 100 aus den Figuren 1, 2 und den Figuren 8 bis 10 weist am ersten Sitzgestellelement 2 angeordnete Horizontalfederung 7 auf. Durch diese Horizontalfederung 7 können am Fahrzeug entstehende Horizontalbewegungen vom Fahrersitz und damit vom Körper des auf dem Fahrzeugsitz befindlichen Fahrzeuginsassen abgehalten oder zumindest gedämpft an diesen weitergegeben werden.

Die Horizontalfederung 7 besteht hierzu beispielsweise aus jeweils zwei seitlich an dem ersten Sitzgestellelement 2 angeordneten Schwingarmen 7.1, die näherungsweise parallel zueinander geführt sind. Diese Schwingarme 7.1 sind jeweils über einen Anlenkpunkt drehgelenkig am ersten Sitzgestellelement 2 und über einen weiteren Anlenkpunkt drehgelenkig mit der Sitzaufnahmeplatte 2.1 verbunden. Vorzugsweise sind vier derartiger Schwingarme 7.1 vorgesehen und zwar jeweils zwei pro Seite. Durch die beschrieben Ausbildung der Horizontalfederung 7 ist eine schaukelartige Horizontalbewegung der Sitzaufnahmeplatte 2.1 gegenüber dem ersten Sitzgestellelement 2 möglich. Vorzugsweise kann die Horizontalfederung 7 Dämpfungselemente umfassen, um die horizontale Schwingbewegung abzudämpfen.

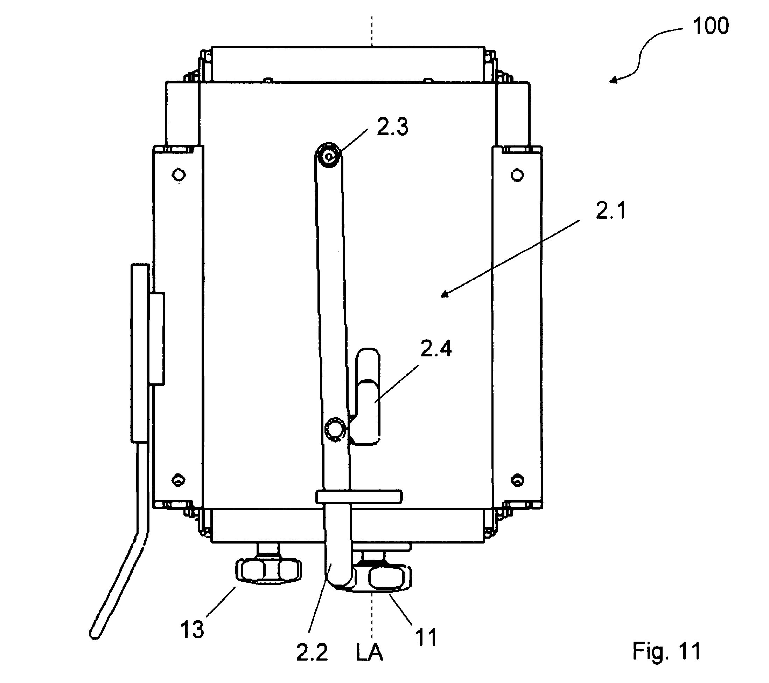

Figur 11 zeigt beispielhaft eine erfindungsgemäße Fahrzeugsitzaufhängung 100 in einer Draufsicht, und zwar auf die Sitzaufnahmeplatte 2.1 des ersten Sitzgestellelementes 2, welches zur Aufnahme einer Sitzplatte vorgesehen ist. Auf der Oberseite der Sitzaufnahmeplatte 2.1 weist das erste Sitzgestellelement 2 beispielsweise einen Verriegelungsmechanismus auf, mittels dem die Horizontalfederung 7 vollständig oder zumindest teilweise begrenzt bzw. freigegeben werden kann. Der Verriegelungsmechanismus besteht aus einem Verriegelungshebel 2.2, der im Wesentlichen in zwei Positionen um einen Drehpunkt 2.3 verschwenkt werden kann.

Der Verriegelungshebel 2.2 weist an seiner Unterseite ein bolzenartiges Element auf, das in eine im Wesentlichen L-förmige Führungsnut 2.4 eingreift. Diese Führungsnut 2.4 weist einen ersten, kürzeren Schenkel auf, der näherungsweise senkrecht zur Bewegungsrichtung der Horizontalfederung 7 verläuft, und einen zweiten, längeren Schenkel, der näherungsweise gleichlaufend mit der Bewegungsrichtung der Horizontalfederung 7 ausgebildet ist. In einer ersten Schwenkposition greift das bolzenartige Element des Verriegelungshebels 2.2 in den ersten, kürzeren Schenkel der L-förmigen Führungsnut 2.4 ein, wodurch die Horizontalfederung 7 blockiert ist. In einer zweiten Schwenkposition befindet sich das bolzenartige Element des Verriegelungshebels 2.2 in dem zweiten, längeren Schenkel der L-förmigen Führungsnut 2.4 und kann sich in dieser in der Bewegungsrichtung frei vor und zurück gleiten, so dass die Horizontalfederung 7 zumindest teilweise freigegeben ist.

Die Erfindung wurde voranstehend an Ausführungsbeispielen beschrieben, es versteht sich, dass zahlreiche Variationen und Änderungen des Anmeldungsgegenstandes möglich sind, ohne hierdurch den Erfindungsgedanken zu verlassen.

### Bezugszeichenliste

- 1: Federungsvorrichtung
- 2: erstes Sitzgestellelement
- 2.1: Sitzaufnahmeplatte
- 2.2: Verriegelungshebel
- 2.3: Drehpunkt
- 2.4: Führungsnut
- 3: zweites Sitzgestellelement
- 3.1: Boden
- 3.2, 3.2': Seitenelement
- 4: erste Hebelvorrichtung
- 4.1, 4.1': Hebelarme
- 4.2, 4.2': erster Anlenkpunkt
- 4.3, 4.3': zweiter Anlenkpunkt
- 5: Federanordnung
- 5.1: erstes Ende der Federanordnung
- 5.2: zweites Ende der Federanordnung
- 6: zweite Hebelvorrichtung
- 6.1: Krafteinleitungshebel
- 6.2: Kraftumleitungshebel
- 6.2.1: Umlenkpunkt
- 6.3: Kraftausleitungshebel
- 7: Horizontalfederung
- 7.1: Schwingarm
- 8: Scherenhubtisch
- 8.1, 8.1': Schenkel
- 8.2: Gelenkpunkt
- 8.3, 8.3': Anlenkpunkt
- 8.4, 8.4': Anlenkpunkt
- 9: Gewindestange
- 10: Gummipuffer

- 11: erstes Handrad
- 12: Bodenelement
- 13: zweites Handrad

- 100: Fahrzeugsitzaufhängung

- a: horizontaler Abstand
- b: vertikaler Abstand
- LA: Längsachse
- VA: Vertikalachse

## Patentansprüche

1. Federungsvorrichtung zumindest für die Vertikalfederung von Fahrzeugsitzen bestehend aus einem ersten und zweiten Sitzgestellelement (2, 3) und zumindest einer Federanordnung (5), wobei das erste und zweite Sitzgestellelement (2, 3) über zumindest eine ersten Hebelvorrichtung (4) gelenkig miteinander verbundenen sind, bei der die zumindest eine Federanordnung (5) an dem zweiten Sitzgestellelement (3) angeordnet ist und bei der zur Krafteinleitung von auf das erste Sitzgestellelement (2) einwirkenden Vertikalkräften in die Federanordnung (5) zumindest eine zweite Hebelvorrichtung (6) vorgesehen ist, die mit der Federanordnung (5) und mit dem ersten Sitzgestellelement (2) jeweils drehgelenkig verbunden ist, **dadurch gekennzeichnet, dass** die zweite Hebelvorrichtung (6) dreiteilig ausgebildet ist und zumindest einen Krafteinleitungs-, einen Kraftumleitungs- und einen Kraftausleitungshebel (6.1, 6.2, 6.3) aufweist, wobei der Krafteinleitungshebel (6.1) und der Kraftausleitungshebel (6.3) drehgelenkig mit dem Kraftumleitungshebel (6.2) verbunden sind.

2. Federungsvorrichtung nach Anspruch 1, **dadurch gekennzeichnet, dass** die Längsachse (LA) der Federanordnung (5) horizontal oder im Wesentlichen horizontal in der Federungsvorrichtung (1) angeordnet ist.

3. Federungsvorrichtung nach Anspruch 1, **dadurch gekennzeichnet, dass** die Längsachse (LA) der Federanordnung (5) senkrecht oder näherungsweise senkrecht zur Vertikalachse (VA) der Federungsvorrichtung (1) angeordnet ist.

4. Federungsvorrichtung nach einem der Ansprüche 1 bis 3, **dadurch gekennzeichnet, dass** die erste Hebelvorrichtung (4) beispielsweise jeweils zwei parallele oder näherungsweise parallele Hebelarme (4.1, 4.1') umfasst, die jeweils mit Ihren freien Enden am ersten Sitzgestellelement (2) in einem ersten Anlenkpunkt (4.2, 4.2') und am zweiten Sitzgestellelement (3) in einem zweiten Anlenkpunkt (4.3, 4.3') gelenkig montiert sind.

5. Federungsvorrichtung nach einem der Ansprüche 1 bis 4, **dadurch gekennzeichnet, dass** die zweite Hebelvorrichtung (6, 6.1, 6.2, 6.3) ein vorzugsweise einstellbares Übersetzungsverhältnis aufweist.

6. Federungsvorrichtung nach einem der Ansprüche 1 bis 5, **dadurch gekennzeichnet, dass** der Kraftumleitungshebel (6.2) drehbar um eine senkrecht zur Längsachse (LA) der Federanordnung (5) und/oder senkrecht zur Vertikalachse (VA) der Federungsvorrichtung (1) verlaufende Drehachse ausgebildet ist und/oder dass der Kraftumleitungshebel (6.2) selbst in einem Umlenkpunkt (6.2.1) drehbar um eine vorzugsweise horizontale Drehachse mit dem zweiten Sitzgestellelement (3) verbunden ist.

7. Federungsvorrichtung nach einem der vorhergehenden Ansprüche, **dadurch gekennzeichnet, dass** die Federanordnung (5) in Form einer Druck- oder Zugfederanordnung ausgebildet ist und/oder dass die Federanordnung (5) als Spiralfeder, als Luftfeder, als Gasdruckfeder, als Öldruckdämpfungssystem oder als Gummidämpfungssystem realisiert ist und/oder dass Mittel (11, 9) zur Anpassung der Federeigenschaften der Federanordnung (5) vorgesehen sind.

8. Federungsvorrichtung nach einem der vorhergehenden Ansprüche, **dadurch gekennzeichnet, dass** zur Krafteinleitung von vertikal auf das erste Sitzgestellelement (2) einwirkenden Kräften in die Federanordnung (5) mehrere zweite Hebelvorrichtungen (6) vorgesehen sind, die vorzugsweise unterschiedliche Übersetzungsverhältnisse aufweisen.

9. Federungsvorrichtung nach einem der vorhergehenden Ansprüche, **dadurch gekennzeichnet, dass** das erste Sitzgestellelement (2) eine Horizontalfederung (7) aufweist.

10. Federungsvorrichtung nach Anspruch 9, **dadurch gekennzeichnet, dass** die Horizontalfederung (7) aus jeweils zwei im Wesentlichen parallel geführten, seitlich angeordneten Schwingarmen (7.1) besteht.

11. Federungsvorrichtung nach Anspruch 9 oder 10, **dadurch gekennzeichnet, dass** die Horizontalfederung (7) Dämpfungselemente umfasst und/oder dass die Horizontalfederung (7) einen Verriegelungsmechanismus aufweist.

12. Fahrzeugsitzaufhängung bestehend aus zumindest einer Federungsvorrichtung (1) gemäß einem der vorhergehenden Ansprüche, **dadurch gekennzeichnet, dass** zur Höheneinstellung der Fahrzeugsitzaufhängung ein Scherenhubtisch (8) vorgesehen ist, der mit Federungsvorrichtung (1) in Wirkverbindung steht.

13. Fahrzeugsitzaufhängung nach Anspruch 12, **dadurch gekennzeichnet, dass** der Scherenhubtisches (8) zumindest ein Bodenelement (12) aufweist, an dem jeweils zwei gekreuzte Schenkel (8.1, 8.1') vorgesehen sind, die über Anlenkpunkte (8.4, 8.4') beweglich bzw. drehbeweglich mit dem Bodenelement (12) verbunden sind.

14. Fahrzeugsitzaufhängung nach Anspruch 12 oder 13, **dadurch gekennzeichnet, dass** die Schenkel (8.1, 8.1') über weitere Anlenkpunkte (8.3, 8.3') mit dem zweiten Sitzgestellelement (3) verbunden sind.

15. Fahrzeugsitzaufhängung nach einem der Ansprüche 12 bis 14, **dadurch gekennzeichnet, dass** die Höheneinstellung des Scherenhubtisches (8) mittels einer Horizontalverschiebung je zweier Anlenkpunkte (8.3', 8.4') erfolgt.

## Claims

1. Suspension device at least for the vertical suspension of vehicle seats consisting of a first and second seat frame element (2, 3) and at least one suspension arrangement (5), wherein the first and second seat frame element (2, 3) are connected to one another for articulated movement via at least a first lever device (4), wherein the at least one suspension arrangement (5) is mounted on the second seat frame element (3) and wherein for the introduction of vertical forces acting on the first seat frame element (2) into the suspension arrangement (5) there is at least one second lever device (6) which is connected for rotary movement both to the suspension arrangement (5) and the first seat frame element (2), **characterised in that** the second lever device (6) is designed in three parts and has at least one force introduction, one force diversion and one force extraction lever (6.1, 6.2, 6.3), wherein the force introduction lever (6.1) and the force extraction lever (6.3) are connected for articulated rotational movement to the force diversion lever (6.2).

2. Suspension device according to claim 1 **characterised in that** the longitudinal axis (LA) of the suspension arrangement (5) is mounted horizontally or
substantially horizontally in the suspension device (1).

3. Suspension device according to claim 1 **characterised in that** the longitudinal axis (LA) of the suspension arrangement (5) is mounted perpendicular or virtually perpendicular to the vertical axis (VA) of the suspension device (1).

4. Suspension device according to one of claims 1 to 3 **characterised in that** the first lever device (4) comprises by way of example two parallel or virtually parallel lever arms (4.1, 4.1') each, which are each mounted for articulated movement by their free ends on the first seat frame element (2) in a first connecting point (4.2, 4.2') and on the second seat frame element (3) in a second connecting point (4.3, 4.3').

5. Suspension device according to one of claims 1 to 4 **characterised in that** the second lever device (6, 6.1, 6.2, 6.3) has a preferably adjustable transmission ratio.

6. Suspension device according to one of claims 1 to 5 **characterised in that** the force diversion lever (6.2) is formed rotatable about a rotational axis running perpendicular to the longitudinal axis (LA) of the suspension arrangement (5) and/or perpendicular to the vertical axis (VA) of the suspension device (1), and/or that the force diversion lever (6.2) itself is connected to the second seat frame element (3) in a diversion point (6.2.1) rotatable about a preferably horizontal rotational axis.

7. Suspension device according to one of the preceding claims **characterised in that** the suspension arrangement (5) is designed in the form of a compression or traction spring arrangement and/or that the suspension arrangement (5) is formed as a coil spring, as a pneumatic spring, as a gas compression spring, as an oil pressure damping system or as a rubber damping system and/or that means (11, 9) are provided for adapting the spring properties of the suspension arrangement (5).

8. Suspension device according to one of the preceding claims **characterised in that** for the force introduction of forces acting vertically on the first seat frame element (2) into the suspension arrangement (5) several second lever devices (6) are provided which preferably have different transmission ratios.

9. Suspension device according to one of the preceding claims **characterised in that** the first seat frame element (2) has a horizontal suspension (7).

10. Suspension device according to claim 9 **characterised in that** the horizontal suspension (7) consists of two rocker arms (7.1) each mounted at the sides and guided substantially parallel.

11. Suspension device according to claim 9 or 10 **characterised in that** the horizontal suspension (7) comprises damping elements and/or that the horizontal suspension (7) has a locking mechanism.

12. Vehicle seat suspension consisting of at least one suspension device (1) according to one of the preceding claims, **characterised in that** for the vertical adjustment of the vehicle seat suspension a scissor lift platform (8) is provided which is in active connection with the suspension device (1).

13. Vehicle seat suspension according to claim 12 **characterised in that** the scissor lift platform (8) has at least one base element (12) on which two crossed arms (8.1, 8.1') are provided which are connected via connecting points (8.4, 8.4') movably or rotationally movably to the base element (12).

14. Vehicle seat suspension according to claim 12 or 13 **characterised in that** the arms (8.1, 8.1') are connected to the second seat frame element (3) via further connecting points (8.3, 8.3').

15. Vehicle seat suspension according to one of claims 12 to 14 **characterised in that** the vertical adjustment of the scissor lift platform (8) is carried out by means of a horizontal displacement of each two connecting points (8.3', 8.4').

## Revendications

1. Dispositif de suspension assurant au moins la suspension verticale d'un siège de véhicule constitué de premier et second éléments de châssis de siège (2, 3) et d'au moins un agencement de ressort (5), les premier et second éléments de châssis de siège (2, 3) étant reliés l'un à l'autre de manière articulée par l'intermédiaire d'au moins un premier mécanisme à levier (4), dans lequel le au moins un agencement de ressort (5) est agencé au niveau du second élément de châssis de siège (3) et dans lequel au moins un second mécanisme à levier (6), relié articulé en rotation respectivement à l'agencement de ressort (5) et au premier élément de châssis de siège (2), est prévu en vue de l'introduction, dans l'agencement de ressort (5), de forces verticales agissant sur le premier élément de châssis de siège (2), **caractérisé en ce que** le second mécanisme à levier (6) est réalisé en trois parties et présente au moins un levier d'introduction de force, un levier de déviation de force et un levier d'évacuation de force (6.1, 6.2, 6.3), le levier d'introduction de force (6.1) et le levier d'évacuation de force (6.3) étant reliés articulés en rotation au levier de déviation de force (6.2).

2. Dispositif de suspension selon la revendication 1, **caractérisé en ce que** l'axe longitudinal (LA) de l'agencement de ressort (5) est agencé de manière horizontale ou essentiellement horizontale dans le dispositif de suspension (1).

3. Dispositif de suspension selon la revendication 1, **caractérisé en ce que** l'axe longitudinal (LA) de l'agencement de ressort (5) est agencé de manière perpendiculaire ou approximativement perpendiculaire à l'axe vertical (VA) du dispositif de suspension (1).

4. Dispositif de suspension selon l'une quelconque des revendications 1 à 3, **caractérisé en ce que** le premier mécanisme à levier (4) comprend par exemple respectivement deux bras de levier (4.1, 4.1') parallèles ou approximativement parallèles, dont les extrémité libres sont montés articulés respectivement en un premier point d'articulation (4.2, 4.2') au niveau du premier élément de châssis de siège (2) et en un second point d'articulation (4.3, 4.3') au niveau du second élément de châssis de siège (3).

5. Dispositif de suspension selon l'une quelconque des revendications 1 à 4, **caractérisé en ce que** le second mécanisme à levier (6, 6.1, 6.2, 6.3) présente un rapport multiplicateur pouvant de manière préférée être ajusté.

6. Dispositif de suspension selon l'une quelconque des revendications 1 à 5, **caractérisé en ce que** le levier de déviation de force (6.2) est réalisé rotatif autour d'un axe de rotation passant de manière perpendiculaire à l'axe longitudinal (LA) de l'agencement de ressort (5) et/ou de manière perpendiculaire à l'axe vertical (VA) du dispositif de suspension (1) et/ou le levier de déviation de force (6.2) lui-même est relié rotatif avec le second élément de châssis de siège (3) autour d'un axe de rotation de préférence horizontal, en un point de déviation (6.2.1).

7. Dispositif de suspension selon l'une quelconque des revendications précédentes, **caractérisé en ce que** l'agencement de ressort (5) est réalisé sous la forme d'un agencement de ressort de compression ou de traction et/ou l'agencement de ressort (5) est réalisé en tant que ressort hélicoïdal, ressort à air, ressort à gaz comprimé, système d'amortissement à pression d'huile ou système d'amortissement par caoutchouc et/ou des moyens (11, 9) sont prévus pour une adaptation des propriétés de ressort de l'agencement de ressort (5).

8. Dispositif de suspension selon l'une quelconque des revendications précédentes, **caractérisé en ce que** plusieurs seconds mécanismes à levier (6) sont prévus pour l'introduction dans l'agencement de ressort (5) de forces agissant de manière verticale sur le premier élément de châssis de siège (2), lesdits seconds mécanismes à levier présentant de manière préférée des rapports multiplicateurs différents.

9. Dispositif de suspension selon l'une quelconque des revendications précédentes, **caractérisé en ce que** le premier élément de châssis de siège (2) présente une suspension horizontale (7).

10. Dispositif de suspension selon la revendication 9, **caractérisé en ce que** la suspension horizontale (7) est constituée de respectivement deux bras oscillants (7.1) agencés de manière latérale et guidés de manière essentiellement parallèle.

11. Dispositif de suspension selon la revendication 9 ou 10, **caractérisé en ce que** la suspension horizontale (7) comprend des éléments amortisseurs et/ou la suspension horizontale (7) présente un mécanisme de verrouillage.

12. Suspension de siège de véhicule constituée d'au moins un dispositif de suspension (1) selon l'une quelconque des revendications précédentes, **caractérisée en ce qu'**une table élévatrice à ciseaux (8), qui est en liaison fonctionnelle avec le dispositif de suspension (1), est prévue pour un ajustement en hauteur de la suspension de siège de véhicule.

13. Suspension de siège de véhicule selon la revendication 12, **caractérisée en ce que** la table élévatrice à ciseaux (8) présente au moins un élément de sol (12) au niveau duquel sont prévus respectivement deux jambes croisées (8.1, 8.1') qui sont reliées mobile ou mobile en rotation à l'élément de sol (12) par l'intermédiaire de points d'articulation (8.4, 8.4').

14. Suspension de siège de véhicule selon la revendication 12 ou 13, **caractérisée en ce que** les jambes (8.1, 8.1') sont reliées au second élément de châssis de siège (3) par l'intermédiaire d'autres points d'articulation (8.3, 8.3').

15. Suspension de siège de véhicule selon l'une quelconque des revendications 12 à 14, **caractérisée en ce que** l'ajustement en hauteur de la table élévatrice à ciseaux (8) a lieu grâce à un déplacement horizontal de chacun des deux points d'articulation (8.3', 8.4').
